# EUROPEAN PATENT APPLICATION

(11) **EP 2 568 427 A1**
(43) Date of publication of application: **13.03.2013**
(21) Application number: 12183982.3
(22) Date of filing: 12.09.2012
(51) Int. Cl.: G06Q 10/10, G06F 17/30, G06F 3/048

(54) **A computer-implemented method for displaying an individual timeline of a user of a social network, computer system and computer readable medium thereof**

(30) Priority: 12.09.2011 US 201161533277 P
(71) Applicant: Gface GmbH, 60322 Frankfurt/Main (DE)
(72) Inventor: Yerli, Cevat, 60314 Frankfurt/Main (DE)
(74) Representative: Schmidt, Steffen

(57) **Abstract**

The present invention relates in general to social networks run an a computer environment and related in particular to methods and systems for displaying an individual timeline of a registered user (member) of a social network in accordance with selectable, pre-selectable or adjustable settings for individual users. The method and system according to the present application provides a user a persistent way to track social moments with content and people, including tracking the past and future of a user's time (e.g. activities and events). At a glance the user can see not only the moment, but the associated people or content and its significance, hereby called "timeline".

## Description

### TECHNICAL FIELD

The present invention relates in general to social networks run in a computer environment and related in particular to methods and systems for displaying an individual timeline of a registered user (member) of a social network in accordance with selectable, pre-selectable or adjustable settings for individual users. The method and system according to the present application provides a user a persistent way to track social moments with content and people, including tracking the past and future of a user's time (e.g. activities and events). At a glance the user can see not only the moment, but the associated people or content and its significance, hereby called "timeline".

### BACKGROUND

With the increasing popularity of social networking traditional forms of joining, sharing interests and hobbies and making appointments, e.g. by joining social clubs, attending social events, meeting friends through other friends, and so forth are replaced by social activities via the Internet, in particular by some sort of social forum for networking and meeting new people. It can even be said that for many people, the Internet nowadays represents the principal way in which the people meet new friends and remain in touch with existing friends, because the Internet enables establishing and maintaining interactions between vast numbers of individuals.

For this purpose various social networking websites have been developed in recent years. Social networking websites can provide organizational tools and forums for allowing these individuals to interact with one another via the social networking website. Many users prefer to limit communications to specific groups of other users or friends sharing the same or similar interests and activities.

The classical way of displaying activities in a time-related fashion is by using a calendar showing either days, weeks or months as boxes. Events are visible, but no additional value is added, especially not in relation to its importance, or to other activities. While this classical way is well suited for office environment, user interaction in social networks and forums require new tools and functionality.

US 2010/0088322 A1 discloses a method for identifying so-called hot topics. For this purpose a news stream is analyzed for keywords and the frequency of citation of the keywords is determined. The method also utilizes a graphical representation for visualizing this frequency of citation of the keywords. If the frequency exceeds a predetermined threshold value, a keyword becomes a hot topic that is e.g. displayed in an online community and thus communicated to a plurality of users potentially interested in this topic.

US 2009/0171869 A1 discloses a related method, which tries to predict hot terms in the future. For this purpose a categorization model is used.

US 2007/0016609 A1 relates to a method for analyzing news streams utilizing tools that can analyze content to determine its traits, classify the content based on its traits, and present the content in a user interface tailored to the classification. The tools can also organize content items into groups based on a common trait and enable a user to select content items through their group. Responsive to the user's selection of a group, the tools can present content, render enclosures, and alter traits of the content items in the group. The content is not tagged with time-information.

US 2009/0319914 A1 discloses a method for determining a relationship between participants in an on-line community based on various facts. The nature of the relationship is represented in a user interface (UI) by a visual element that shows the extent or depth of the relationship. Facets of the relationship may be used to facilitate interaction between participants (e.g., if two participants both like a particular band, then information relevant to the band may be shown as part of the UI when the participants interact with each other). The nature of the relationship may be determined or characterized based on commonality of activities, commonality of interests, the extent to which the participants have interacted with each other in the past, or other facts.

US 2005/0198031 A1 discloses a method and system for controlling access to content in a social networking environment. A first user can define relationships with a plurality of second users by assigning one or more relationship designators for each relationship. The first user stores content within the social networking environment and denotes individuals allowed to or prevented from accessing the content by entering one or more relationship designators. The first user may further control access by using tier designators. The social networking environment may generate a proximity index based on the relationships between a first user and a particular second user. The first user may control access to content based on the proximity index. The first user may also allow or prevent the reception of content from other users having particular relationship designators, tier designators, and/or proximity indices with respect to the first user. In this system environment also the content of a personal calendar of an individual user of the social network can be shared with other members of the social network. However, no specific graphical representation of the calendar is required.

US 2007/0214141 A1 discloses a system and method for generating a social timeline. A plurality of data items associated with at least one relationship between users associated with a social network is received. Each data item is associated with a specific time tag representing an event in the past. The data items are ordered according to the at least one relationship and a social timeline is generated according to the ordered data items. This social timeline includes only events in the past of at least two users connected with each other as friends in the social network. The graphical representation of the events of the users is performed in a uniform standard manner.

### SUMMARY

The present application is directed to an enhanced method and system for generating and displaying a graphical representation of events and/or entries as an individual timeline of a user of a social network.

According to the present invention there is provided a computer-implemented method for displaying an individual timeline of a user of a social network, said timeline being a graphical representation of events and/or entries, which are of interest to said user and are displayed in their chronological order, comprising the steps of: maintaining in a computer system for each user of said social network data on individual preferences and/or interests of the user and the significance of each preference and/or interest for the user; obtaining input data including data on events and/or entries; attributing a time tag to said events and/or entries of said input data; and displaying at least one selected one of said events and/or entries of said input data in the individual timeline of said user; wherein the graphical representation of each selected event and/or entry displayed is dependent on the individual preferences and/or interests of said user.

### BRIEF DESCRIPTION OF DRAWINGS

Hereinafter embodiments of the present invention will be set forth in an exemplary manner and with reference to the enclosed drawings, from which further features, advantages and technical effects achieved will become apparent. In the drawings:
- Fig. 1: is a schematic block diagram of an exemplary system environment for implementing a social network;
- Fig. 2: is a schematic block diagram summarizing the processes of obtaining input data and filtering the input data in accordance with the personal preferences and/or interests of an individual user of the social network according to Fig. 1;
- Fig. 3: is a schematic block diagram of the social network engine shown in Fig. 2;
- Fig. 4: is a schematic diagram summarizing options presented to a user to set or adjust preferences and/or interests when interacting with the social network according to Fig. 1;
- Fig. 5: is an exemplary graphical representation of a so-called interest cloud showing the preferences and/or interests of the user as a result of setting or adjusting the personal preferences and/or interests when interacting according to Fig. 4;
- Fig. 6: is another exemplary graphical representation showing the preferences and/or interests of the user as a result of setting or adjusting the personal preferences and/or interests when interacting according to Fig. 4;
- Fig. 7: is a schematic flow diagram of an exemplary step of obtaining input data in a method according to an embodiment of the present invention;
- Fig. 8: is a schematic flow diagram of an exemplary process for generating and displaying a timeline according to an embodiment of the present invention based on the data input according to the process of Fig. 7;
- Fig. 9: is a schematic diagram showing a timeline according to a first aspect of the present invention;
- Fig. 10: is a schematic diagram showing a timeline according to a second aspect of the present invention; and
- Fig. 11: is a schematic diagram showing a timeline according to another aspect of the present invention.

### DETAILED DESCRIPTION

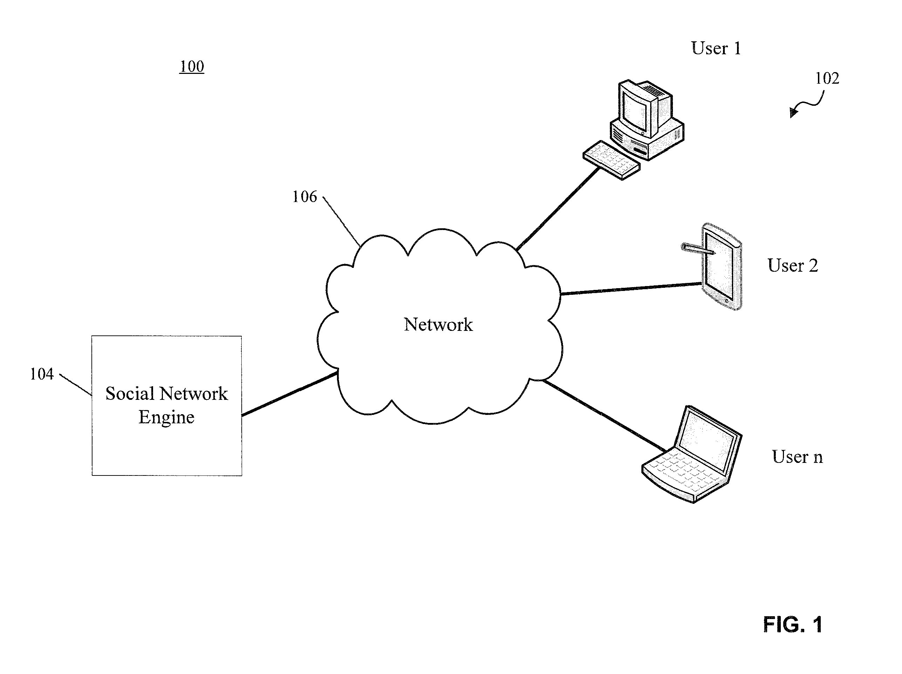

FIG. 1 is a schematic block diagram of an exemplary system environment 100 for implementing a social network according to an embodiment. One or more users 102 user 1, user 2, ... user N are in communication with a social network engine 104 via a network 106. The social network engine 104 operates a social networking website and may include one or more servers (not shown) or any other device or application capable of providing social networking services via the network 106. The users 102 can access the services provided by the social network engine 104 via the network 106.

The users 102 may use a computing device, such as a laptop or desktop computer, a smart phone, a personal digital assistant (PDA), a set top box, and so forth to access the social network engine 104. The users 102 can view data about social network members, view a timeline as outlined in the following, enter data about themselves and possibly others, join social network groups, and so forth. The users 102 are typically members of a social networking website associated with the social network engine 104.

When being connected to the social network, a user, such as the user 1, can identify one or more other members associated with the social network engine 104 as friends, such as user 2. Friends will usually share similar preferences and/or interests and such relationships can be established based on user input, e.g. when a user explicitly appoints another member of the social network as a friend based e.g. on similar preferences or interests as determined based on individual preferences input by the two users. As an alternative such relationships can be established based on user interaction with the social network and as a result of a proposal generated automatically by the social network and sent as a message to two users asking them for confirmation whether the respective other user shall be a friend. Such a proposal can be made by the social network engine 104 based on an automatic search in the preferences and/or interests stored in the social network engine for preferences and/or interests of two users matching with each other suitably well.

The relationship between users 102 of the social network may be confirmed, based on the input, by the social network engine 104. Alternatively, the existence of the relationship may be denied, according to some embodiments. Any type of confirmation and/or input may be utilized to alter, deny, and/or establish the relationship between users 102.

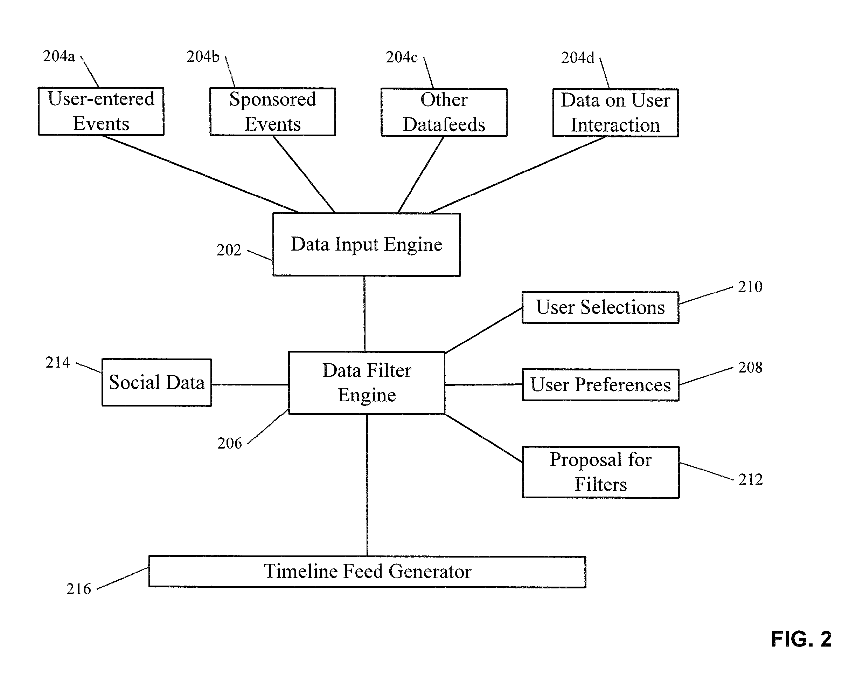

Fig. 2 is a schematic block diagram summarizing the processes of obtaining input data and filtering the input data in accordance with the personal preferences and/or interests of an individual user of the social network according to Fig. 1. All data are input via a data input engine 202, which can be a component of the afore-mentioned social network engine. Various types of data input may be provided: a) the data input may consist of all kinds data about events 204a explicitly input by the user via a user interface, such as a keyboard, graphical user interface (GUI) or interface with other peripheral devices, such as video cameras and the like; b) the data input may also consist of data on sponsored events 204b, which may be information provided by usually commercial subscribers of the services rendered by the provider of the social network; as an example a developer or publisher of video games may subscribe to the social network or may be a member of the social network and may feed data to the social network about new games and information thereabout; c) the data input may also consist of other datafeeds 204c, such as RSS-Feeds; d) the data input may also consist of data on the interaction 204d of the specific user associated with the timeline to be generated or of all users of the social network or of subgroups of the social network, such as special communities, such data being generated by continuously monitoring and analyzing the user interactions in accordance with search criteria; as an example the provider of the social network may monitor and analyze, e.g. only if the users agree to, all interactions of the users of the social network associated with video games and may prepare these data as input data. For this purpose events, such as when a user decides to watch a trailer of a new video game to be launched soon (e.g. by clicking on an icon or link to the trailer) or decides to play a test version of the new video game, are associated or linked with keywords describing the event (e.g. in the example: the name of the new video game).

All the above input data may be associated with certain keywords circumscribing the event. Such keywords may briefly categorize the content, purpose, place, length etc. of the event or categorize any action involved in the event. These keywords may be used later for the decision whether or not a specific event matches the individual preferences and/or interests of a user and whether or not the event shall be displayed in the personal timeline of the user.

Of course, instead of words, the phrase "keyword" as used herein may involve all other kinds of data that may be used to categorize events. As will be explained in the following in more detail, such keywords may be explicitly input by users, may be automatically generated or proposed based on an analysis of the input data or may be proposed by the system and are used only once accepted by a prompted user or being in accordance with the individual preferences and/or interests of a user.

According to the present invention all events are associated with time tags, which are usually automatically generated while monitoring the events, but which may also be generated by user interaction. Such time tags enable the sorting of a plurality of events in chronological order, as a prerequisite for displaying selected ones of these events in chronological order in the individual timeline of a user.

The afore-mentioned input data may be stored in a database of the social network engine, usually together with the keywords and the associated time tags.

As shown in Fig. 2, the system further comprises a data filter engine 206, which filters the afore-mentioned input data or any data derived from these input data and transferred from the data input engine 202. This data filter will usually be located on the side of the provider of the social network as part of the social network engine, but may in principle also be located on the side of the user. As shown in Fig. 2 the data filter engine 206 is fed with user preferences and/or interests 208, possibly also with user selections 210, which might encode specific preferences and/or interests of a user, and might also be fed with proposals for filters 212, e.g. in the case where a sponsored subscriber of the social network wishes to promote a new video game and thus causes the social network engine to propose all users of the social network or selected ones of these users to add certain preferences and/or interests to the personal profile of the user in order to increase his or her interest on video games in general or an a specific video game in particular.

Finally, as shown in Fig. 2, the data filter engine 206 may also be fed with so-called social data 214, as the result of interactions of all users of the social network or of subgroups thereof, such as communities. As an example, if the total number or percentage of users showing interest in a new video game, either by explicitly mentioning the name of the new video game when being prompted for such input or implicitly, e.g. as the result of user interactions, e.g. when the users click on a link or icon associated with the new video game, exceeds a certain threshold, the social network engine may propose all users of the social network or selected ones of these users to add certain preferences and/or interests to the personal profile of the user in order to increase his or her interest on the new video game. These proposals may either be accepted by the prompted users by means of a confirmative action, such as clicking on a "YES"-button, or may be accepted automatically, depending on the individual user profile or on the regulations of the provider of the social network.

As shown in Fig. 2, the afore-mentioned input data are filtered by the data filter engine 206 in accordance with the user-specific preferences and/or interests of the owner of the particular timeline to be displayed. As an example, if the input data include data relating to video game events and political events, but the individual preferences and/or interests 208 of a user indicate that the particular user is highly interested in video games but not at all in political events, all (or most of the) data relating to the political events are filtered out and only those relating to video games are passed through the data filter engine 206 for display in the personal timeline of an individual user by means of the time feed generator 216 shown in Fig. 2.

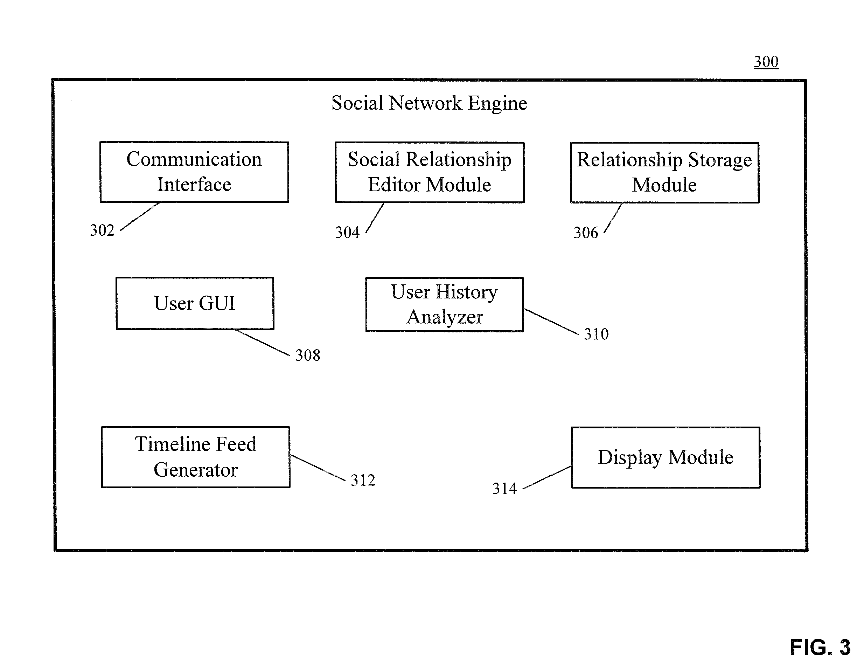

For implementing the above functionality, a social network engine 300 may include the components shown in Fig. 3, although the present invention shall not be delimited to only those components shown in Fig. 3. More specifically, the social network engine 300 may include a communication interface 302, for handing all communication and exchange of data of the user with the social network engine 300 or with other users of the social network, a social relationship editor module 304, which serves in particular for assigning other users of the social network as friends and for monitoring and analyzing the whole data traffic in the social network for identifying candidate new friends for specific users e.g. based on the past user interaction in the social network, a relationship storage module 306 for storing these assigned or candidate relationships, a module 308 for driving a user graphical user interface (GUI), a user history analyzer 310 for monitoring and analyzing the interaction of a specific user or of all users of the social network or of subgroups thereof, such as communities, a timeline feed generator 312 as outlined above with reference to Fig. 2 and a display module 314 configured for providing a display of the user's electronic device with all relevant data for displaying a timeline in the sense of the present application.

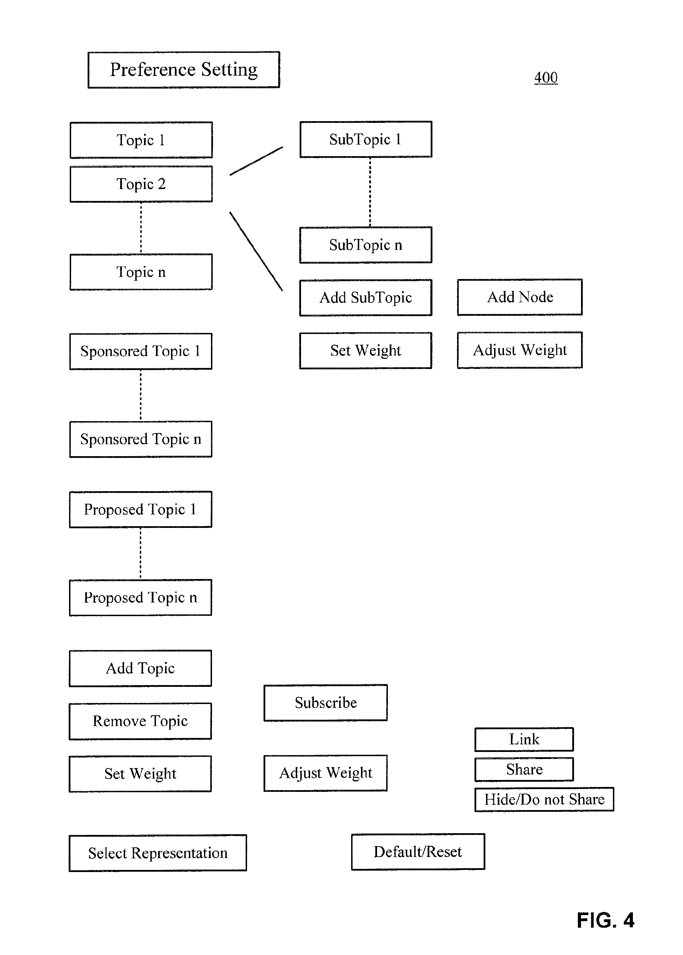

As set forth above, a user may specify individual preferences and/or interests when using and navigating the social network. The term "individual preferences and/or interests" in the sense of the present application shall comprise all suitable criteria and data for reliably identifying individual preferences, interests, dispositions, favorites, long-time user behavior etc. of a specific user when exploring the social network. These individual preferences and/or interests may be input explicitly by the user by means of the web-oriented input mask as shown in Fig. 4 presenting a variety of options to a user to set or adjust his or her individual preferences and/or interests when interacting with the social network. It will be apparent that the input mask shown in Fig. 4 serves only as one example that shall not be construed to delimit the scope of the present application. According to the present application, these individual preferences and/or interests may, however, also be input implicitly as outlined below or automatically, in a clandestine manner, as outline below in more detail.

More specifically, for selecting and adjusting his or her individual preferences and/or interests, the social network engine may present an input mask 400 as shown in Fig. 4, e.g. when clicking on a menu button "PREFERENCE SETTING". Under this menu item the input mask 400 presents a list of topics TOPIC 1, ..., TOPIC N, which may be pre-selected topics pre-defined by the provider of the social network, which list may, however, also be the result of some kind of background computation, e.g. based on the list of preferred topics of friends with whom the specific user is already connected. As an example, these topics may include "FRIENDS ACTIVITIES", "GAMES", "RESULTS OF ONLINE-GAMING EVENTS", "COMMUNITY NEWS" and the like. As shown in Fig. 4, this list may further include so-called sponsored topics "SPONSORED TOPIC 1", ..., "SPONSORED TOPIC N", which may be topics pre-defined by the provider of the social network, e.g. because of commercial interests of the provider such as advertisement and promoting of goods of customers or affiliated companies. As shown in Fig. 4, the list of topics may also include so-called proposed topics "PROPOSED TOPIC 1", ..., "PROPOSED TOPIC N", which may be topics identified by the user history analyzer (cf. Fig. 3) as candidate topics of potential interest to a specific user based e.g. on the recent user interactions of the user in the social network, or identified by the social relationship editor module as candidate topics of potential interest to a specific user based e.g. on the friends with whom the specific user is connected to in the social network (relationship significance). Of course, the user history analyzer of the social network engine shown in Fig. 3 may also identify certain topics as candidate topics of potential interest to a specific user based on the overall user behavior of all users of the social network or subgroups thereof such as communities. As an example, if the user history analyzer determines that a significant percentage of the users click on websites about specific topics or if the user history analyzer determines that a significant percentage of all those users that have all defined a specific topic as a topic of preference and/or interest (subgroup) click on websites about this specific topic, then the social network engine may proposed such topics as proposed topics in the input mask shown in Fig. 4. The individual user may then be prompted to confirm whether he or she wishes to add this proposed topic (or interest) to his list of individual preferences and/or interests (community significance).

As shown in Fig. 4, the user has all options to add and remove such topics (preferences and/or interests) to or from his individual list, at any time. The user may also subscribe to data feeds about certain preferred topics. E.g. the user may wish that a news feed with news about new video games is automatically scanned in accordance with his or her individual preferences and/or interests and that candidate new topics of interests are either proposed in the input mask 400 shown in Fig. 4, in the manner as outlined above, or even automatically added to his or her individual list of preferences and/or interests.

As shown in Fig. 4, the user may also decide that certain or all preferences and/or interests included in his or her individual list are linked and/or shared with other users of the social network or even with users who are not members of the social network, or that such preferences and/or interests are hidden to and not shared with other users of the network or, as an alternative, hidden to and not shared with specific selectable other users or friends with whom the individual user is connected to.

As shown in Fig. 4, when operating the input mask 400, the user may also assign or re-adjust so-called weights to selected ones of the above topics. In the sense of the present application the term "weight" refers to any kind of variable or computational parameter suited to indicate the significance of a respective preference and/or interest to the individual user, which variable or parameter may be used attribute a higher significance to such topics (preferences and/or interests) when filtering the input data. As an example, a user may decide that the topic "GAMES" and "NEWS ABOUT NEW GAMES" is of high significance whereas the topic "COMMUNITY NEWS" is of almost zero importance to the user. In such a case the user may assign e.g. a high significance parameter in accordance with a uniform scale to the favorite topics "GAMES" and "NEWS ABOUT NEW GAMES" and a significance parameter of almost zero to the not preferred topic "COMMUNITY NEWS". All this may be set or adjusted as specifically desired by the individual user, at any time when exploring the social network.

If applicable, the user may add, remove or change any of the above topics (preferences and/or interests) or assign or re-adjust desired weights to such topics.

As shown in Fig. 4, the user may also set or adjust the graphical representation for each of the above topics. As an example, the user may decide that all events relating to video games are shown as circles in his individual timeline accompanied by an icon showing a representative image of the video game, such as the trademark or most important character of the game, and that all events relating to his personal activities, such as appointments or conferences in the social network, are shown as squares in his individual timeline accompanied by an icon showing a representative image of the respective activity, e.g. a frog symbol relating to online chats and a mouse symbol for shared online game events.

As shown in Fig. 4, a list of second order subtopics may be attributed to each of the above topics (SUBTOPIC 1, ..., SUBTOPIC N), and each subtopic may be added or removed, a specific weights may be attributed to each of these subtopics or re-adjusted. Furthermore, additional "nodes" may be added, which shall relate to the generic term for attributing one or more third order subtopic(s) to a specific second order subtopic.

In this manner, a complex interest cloud representing all preferences and/or interests of an individual user may be built up as explained in more detail in the following.

### Interest Cloud

More specifically, the interest cloud is a defined space of explicit and implicit preferences and/or interests shown e.g. as weighted keywords that reflect the individual preferences and/or interests of a specific user or a specific group of users towards content (news, blogs, media, games, people, activities, sponsored content, ads, files, pages...). The interest cloud itself is updated based both on the behavior of the user - the system may implicitly weight keywords based on frequency of interaction of associated content - and/or by the user directly and explicitly adding or removing keywords and increasing or reducing the weight of such keywords, based on his degree of interest, in the manner as set forth above with reference to Fig. 4. The user can re-weight, edit, modify, delete or perform other changes also on implicit keywords from the system, to further refine his interest cloud. Context keywords are added or layered upon the existing interest cloud to maximize the correct representation of the user's true interests.

The interest cloud will mainly be used in online networks such as web communities & content portals, but is not limited to these.

The purpose of the cloud is to give the user(s) an easy-to-understand, user-controlled and manageable representation of his/their interests towards content. As a secondary use, the self-managed interest cloud gives content producers (i.e. bloggers, advertisers, manufacturers, communities) a higher hit-ratio and content will be more accepted by the users if the content is actually in the interest of the recipient.

The interest cloud provides the server with information about keywords the user is or might be interested in depending on his direct interaction with the keywords, implicit keywords and contextual keywords. In other words, an interest cloud is a combination of user-defined keywords, auto-keywords and context based keywords that help the user to organize his interests.

Content the user has already marked as "interesting to me" will be part of his personal interest cloud by either becoming a keyword itself or by the system deriving keywords from that content. The system creates these implicit keywords by filtering the user's entered profile data, tracking his interaction with content and noting the data of other users he is connected to as well as users with similar interest cloud(s). This is not an exhaustive list: other methods can also be used to collect and predict implicit interest for the interest cloud.

In addition, the user (or users) may explicitly define keywords in the interest cloud by weighting their significance to him or her.

The user's context, if available, also adds keywords with weighting and significance to the interest cloud. This can include examples such as geographic position (for instance, being in a music-shop in France, being in a movie-theater, being in a restaurant).

### Content of the interest cloud

The interest cloud contains keywords that stand for certain content, information or activities and any other possible items (preferences and/or interests). For instance, a keyword can be "politics, news" and link to news about politics in general, another can target a single subcategory of news, such as local politics or "news, politics, home country". Other keywords could be music tracks, video files, pictures, persons, characters, events and more.

Any keyword can theoretically link to any other keywords, creating links between products, persons, files, etc. and in any wanted granularity. Thus any keyword is always in the context of its similar keywords. Context and similarity is partly defined by the system and partly defined by the active creation of new contexts by the user. It is up to the user to control their interest cloud (directly or indirectly, explicitly or implicitly). Each personal interest cloud also influences the overall context, i.e. if a lot of users connect to keywords manually together that had not been previously connected by the system, the general context or default connection will be updated too.

### Structure of the interest cloud

Every user can express multiple interest clouds, having a main interest cloud about the high-level content he is interested in, as well as interest-clouds for specific content-types, people, activities and more. Depending on the sub-pages and content-box, the community or network provides a sub-interest cloud that is focused on the specific interests for that sub-page, content-box or category.

Example: User A is not interested in news in general, thus he doesn't include "news" in his main interest cloud. But when it comes to music, he is very interested in news about his favorite bands. His main interest cloud doesn't contain any news, but his music sub-group is concerned with everything about his favorite bands - including news.

Likewise, it is possible that the main-interest cloud defines a user's interest in "News" and has sub-interest clouds focused around topics such as music, cars, etc. In this case, the main-interest cloud is given hierarchy over the sub-interest clouds and hence "influences" the overall content that is provided to the user.

Each keyword in the interest cloud has its own weighting & significance attached to it. This reflects how important the item is to the user. The graphical representation of each keyword in the interest cloud reflects this weighting & significance in a unique manner that may also be adjusted individually in accordance with the needs and preference of the individual user. As an example, the significance of each keyword may be indicated by means of the font size, e.g. a bigger keyword shows a higher degree of importance and a smaller keyword may show a lower degree of importance, but the present invention is, of course, not limited to this kind of display. Other means to display significance could be e.g. by means of color-coding, numbers associated with the key-words and the like.

The interest cloud(s) of the user enables the server (social network engine) to process the interest cloud in order to provide each user with a higher relevancy of web-content, media, files and people in an ordered, prioritized and organized way.

### Implicit keywords of the interest cloud

The interest cloud of any user may also be created dynamically, based upon the profile information the user added to his or her individual profile and by his online behavior. This automatic creation and changes afterwards reflects the interests of the user expressed in an implicit way.

The user can also provoke the system to propose implicit keywords based on existing keywords. For example, if the user adds "restaurants" as a keyword to his interest cloud, this triggers the system to suggest related keywords that might also interest him. These could include "fast-food restaurants", "exotic restaurants", "restaurants near my location", "restaurants my friends like", etc. Such proposals may be made based on some kind of expert system that e.g. knows or learns from a user's behavior in the past that it is highly likely that a user might also be interested in certain subtopics (e.g. exotic restaurant) if he or she is interested in a certain main topic (e.g. restaurant).

### Real- time context keywords

Real-time context-specific keywords may also be added dynamically, such as geographic context (being in a city, country, a shop, a restaurant) and other contexts (such as but not limited to being in winter, in week 41...). This lets the system retrieve content organized with the help of the user's interest cloud to ensure that is relevant to the context the user is in.

### Explicit interest cloud

The user can also add, reprioritize, change and delete any explicit and implicit keywords inside his interest cloud, on any level. He or she can also enable or disable, reprioritize, change and delete context-specific keywords, thus changing the interest cloud manually in any way needed to tailor it to his satisfaction and his context. This may be performed by operating the input mask described with reference to Fig. 4, but may also be performed directly in a graphical representation of the individual interest cloud as outlined below.

### Hierarchy of the interest cloud

The complete interest cloud of a user may be organized in layers. There is e.g. one main interest cloud and an open number of special interest clouds. This amount depends on the actual amount of interests the user creates in his profile.

### Main interest cloud

The main interest cloud of every user contains the most important interest keywords (preferences and/or interests) the user has, on the broadest possible level. Interests of the main cloud apply to all special interest clouds. For example, if the user is interested in music in general, the news interest cloud will include news about music by default, as the system implies that this might be in the interest of the user too.

### Special interest cloud

The special interest cloud contains all interests a user has in a specific part of the cloud, e.g. all interests about games. By default, the special cloud is derived from the main interest cloud, but it can by altered as described above. As the interest cloud is a constantly changing network of interests linked to each other, the size and granularity of the cloud is highly dependent on the user's behavior.

### Storage of the interest cloud

The interest cloud is stored as a network of keywords. The interest cloud is stored in several levels (e.g. main cloud, sub-clouds), is linked to a user or group and is stored as part of their main profile on the server (social network engine), and is therefore available for the user anywhere when accessing his profile. A user's interest cloud will be stored alongside his profile for as long as that profile exists, and can be modified by the user at anytime.

### Display of the interest cloud

To display the interest cloud in the way the cloud functions in the background, according to the present application the items may be displayed in different groupings and styles (e.g. the size of a respective interest may indicate the significance attributed to the respective interest). Thus the user can quickly identify his major interests and how the other items are connected to each other.

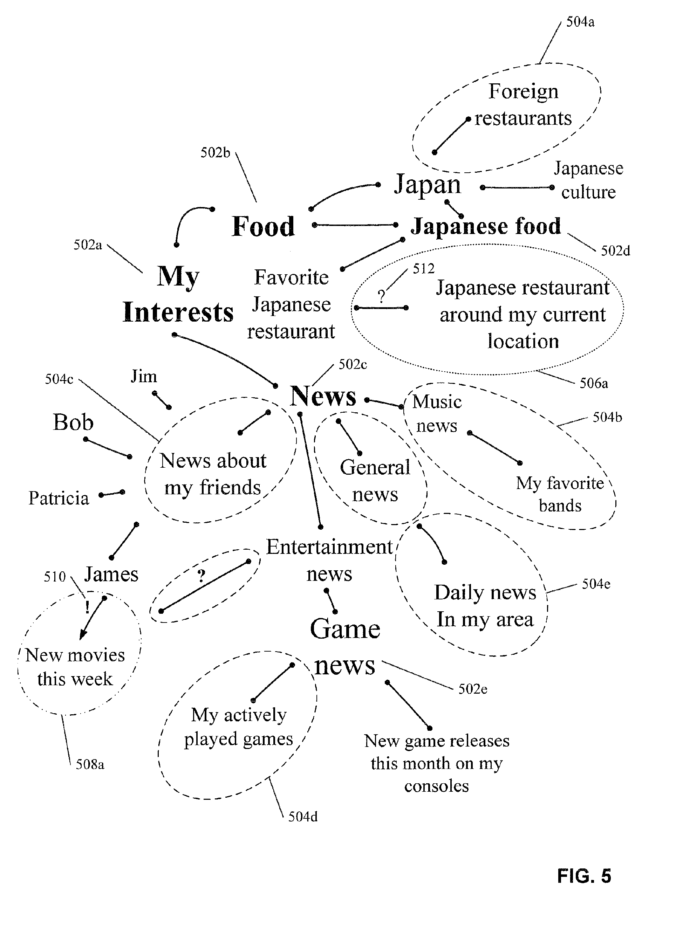

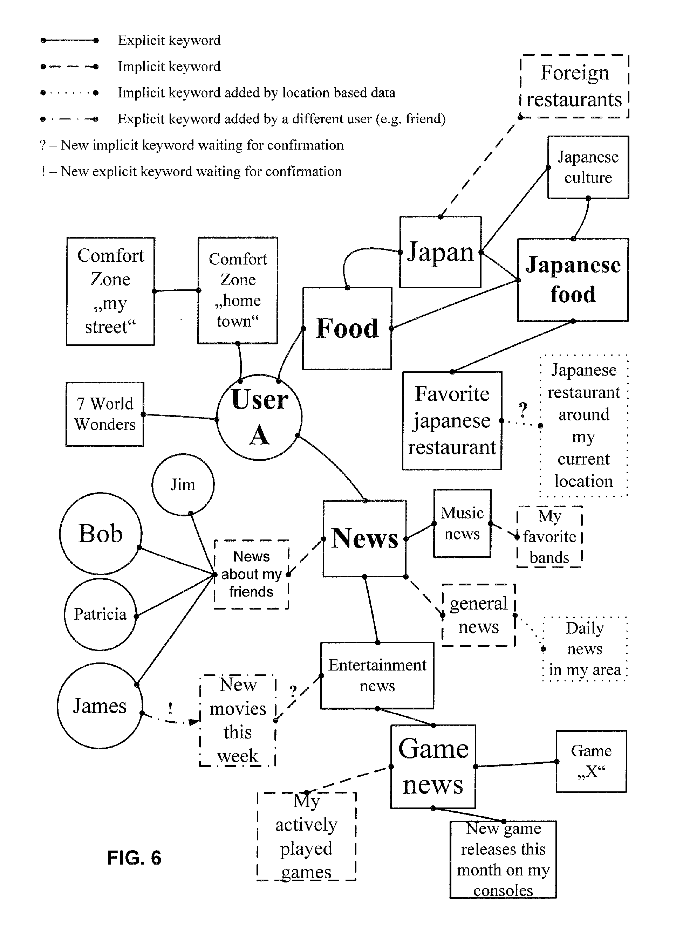

Two examples for the graphical representation of such an interest cloud are shown in Fig. 5 and 6 and will be described in the following. It is noted that the following shall not be construed as delimiting the scope of the present invention.

Implicit, system-created interest keywords within the cloud have a distinguishable look compared to the explicit keywords. This differentiation includes but is not limited to color-coding, different font-size or the annotation of the keyword with symbols, e.g. @musicgroupname.

Context-created interest keywords within the cloud have a distinguishable look compared to the explicit & implicit keywords. This differentiation includes but is not limited to, color-coding, different font-size or the annotation of the keyword with symbols, e.g. c_paris, c_restaurant.

In Fig. 5, keywords 502a, ..., 502e in black letters indicate explicit keywords, i.e. keywords (preferences and/or interests) explicitly input by the user, e.g. by using the input mask 400 of Fig. 4. Keywords 504a, ..., 504e, enclosed by a dashed line in Fig. 5 indicate implicit keywords. In the example the location of the user while exploring the social network is detected by means of the user history analyzer (cf. Fig. 3) and communicated to the social network engine, which then proposes candidate keywords such as "foreign restaurants" 504a, "daily news in my area" 504e or "my actively played games" 504d which may then either be accepted (confirmed) by the user or rejected. This is one example of context-based data. In Fig. 5 keywords 506a enclosed by a dotted line indicate implicit keywords added by location based data. As an example, the geographical location of the user's mobile electronic device is continuously detected and communicated to the social network engine, which then, based on an expert system, proposes candidate keywords of potential interest to the user, such as "Japanese restaurant around my current location" 506a, if the system knows that the user has a certain interest in Japanese food, e.g. based on the selection and significance of the topic "Favorite Japanese restaurant" in the list of keywords (preferences and/or interests) of the individual user.

In Fig. 5, keywords 508a enclosed by a dashed and dotted line indicate explicit keywords added by a different user of the social network, such as friends connected to the user. As an example, if both users share the interest of enjoying movies, the second user (or as an alternative also the social network engine) may propose to the first user to add the item "new movies this week" 508a to his interest cloud. The first user is easily aware of this proposal, because this proposal may be clearly marked, for example, by means of a color encoding explicit keywords added by a different user. The exclamation mark "!" 510 in the interest cloud (or any other suitable graphical symbol) indicates that the new explicit keyword 508a needs to be confirmed before it will be added as a real effective keyword to the individual interest cloud of the first user. Of course, if the first user should reject (not confirm) the proposed keyword, it will finally disappear (or become inactive) in his individual interest cloud. As an alternative, the proposed keyword may become active (effective) if the user should not operate the proposed keyword during a given time period.

In Fig. 5 the question mark "?" 512 (or any other suitable graphical symbol) indicates that the new implicit keyword 506a needs to be confirmed before it will be added as a real effective keyword to the individual interest cloud of the first user. Of course, if the first user should reject (not confirm) the proposed keyword, it will finally disappear (or become inactive) in his individual interest cloud. As an alternative, the proposed keyword may become active (effective) if the user should not operate the proposed keyword during a given time period.

As will become apparent to a person skilled in the art, instead of changing or re-adjusting the individual preferences or interests in an input mask, such as that shown in Fig. 4 and explained above, the user may, of course, also grasp certain keywords in the interest cloud shown in Figs. 5 and 6 and move or manipulate these keywords as desired to thereby establish new user-specific preferences and/or interests. As an example, by dragging the keyword "News about my friends" from the left-hand side of the interest cloud towards the right-hand upper part of the interest cloud, i.e. near the keyword Japan, new links between keywords may be established, linking e.g. news about all those friends of the user that are interested in the topic Japan, to thereby establish a link between these friends and the topic "Japan".

The above interest cloud is a small example of how the concept works. The keywords of the example may be marked using different colors to show the status of the different keywords. For example, black keywords may be edited by the user, all green ones may be implicit and were added by the system as suggestions to the user, based on his interests. A blue addition may also be an implicit keyword, but is added based on the current location of the user. A red keyword may be a suggestion by a friend of the user.

Question marks 512 in the above example show where new additions are made by the system that the user might want to edit. They are an optional feature to highlight changes in the interest cloud. Exclamation marks 510 are similar, as they also wait for confirmation, but were added explicitly by a friend of the user and thus have a different quality to the interest cloud.

Of course, also different graphical representations of the interest cloud may be utilized, implying different graphical encodings for relationships and functionality. One example for such an alternative graphical representation is shown in Fig. 6, where the different sizes of graphical symbols circles indicate the weights attributed to specific keywords displayed in the interest cloud.

As will become apparent to a person skilled in the art, many different styles of graphical representations may be utilized for displaying the individual keywords (preferences and/or interests) of an individual user.

### Obtaining Input Data

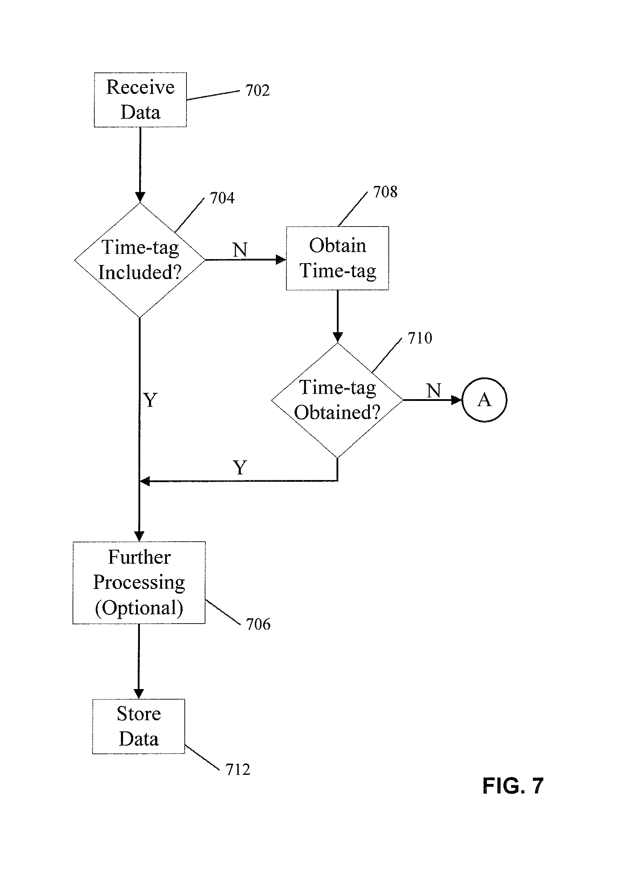

As shown in Fig. 7 the social network engine receives 702 input data in various different ways and from various different sources as outlined above.

In a next step it is checked 704 whether the received or input data include a time-tag indicating the exact date of some kind of event. Preferably, once a datum is associated with a time-tag, the time-tag is either in a pre-defined data formal or the existence of the time-tag is indicated by a flag or similar indication in the data enabling a quick and simple search for such time-tags and further processing. As an example, a user may enter data (information) about an event together with time information about the exact date and possibly also time duration of the event and according to the present invention the data about the event and the time-information (time-tag) are linked with each other.

If the data includes a time-tag, the process continues with a step of further processing 706 the input data, as described below in more detail. On the other hand, if the data do not include a time-tag the process tries to obtain 708 a time-tag in an additional process step. For this purpose, the user may explicitly be prompted to enter relevant time information for an event of interest. Or the social network engine may try to obtain such time information based on other information sources, such as a search in the social network, in an internal or external data base for related time information or based on a contextual search procedure, where based on contextual information about the event the social network engine performs a search for time information associated with the event. If such time-information can be obtained 710 in this manner it may be used or further processed as a time-tag, be it automatically without further user input, be it that an explicit confirmation of the user is requested for this purpose. When as a result of this process step the time-tag is finally obtained, the process continues with further processing 706 the input data. Otherwise, the process may continue with a fallback routine and return to the step of "receiving input data" 702.

The input data, which include a time-tag in the prescribed manner, may then be further processed in various manners. As an example, the input data may be stored 712 in a database accessible by all or selected users of a social network via the social network. Or the input data may be associated with various kinds of keywords and stored in a database of the social network, thus enabling a quick and simple categorization of the data in accordance with e.g. individual user preferences and/or interests. Or the data may be sorted in chronological order, in accordance with the time history given by the time-tags associated with the data. The data may then be stored in the database in this chronological order. Or the social network engine generates a link to the event and some keyword information about the event that will be sent to the individual user later instead of transmitting all detailed information about the event. By clicking on the link or some other kind of icon the user may then retrieve all necessary information about the event only if needed to save computing time and transmission bandwidth otherwise. As will become apparent to the person skilled in the art, many different ways of further processing can be performed for the input data.

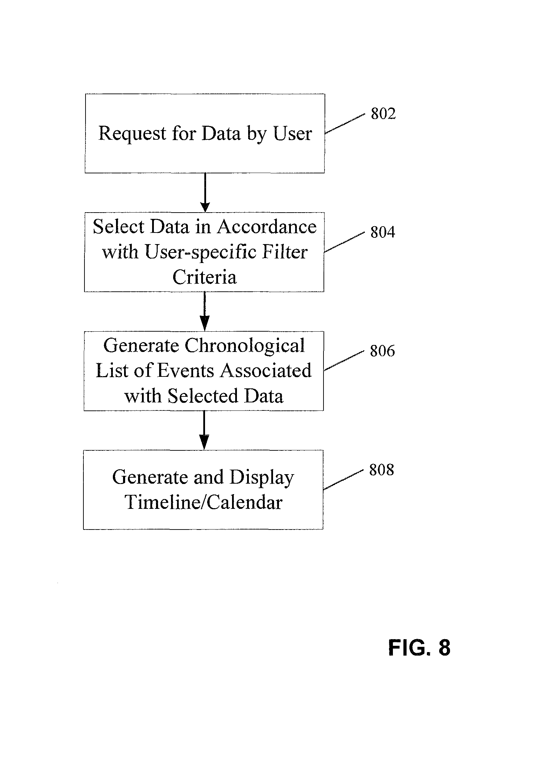

As shown in Fig. 8, once a user is logged-in in a social network, a request 802 for data is generated by the user, requesting data from the social network engine, such as his personal news data, information about news in the social network, new messages and notifications in the social network for the user. As shown in Fig. 8, the social network engine then selects 804 (sorts out) all those data in accordance with user-specific preferences and/or interests and presents these data to the user. To this regard the data filter engine 206 shown in Fig. 2 may filter the input data (or as an alternative data stored for the user in a data storage) in accordance with the individual preferences and/or interests of the user, possibly also in accordance with additional data such as user selection data 210, proposals for filters 212 or social data 214 (cf. Fig. 2), and enables access to these data to the specific user. This does not exclude, of course, that also other data may be provided to the user. However, those input data that are selected in accordance with the individual preferences and/or interests of the specific user are treated or transmitted with higher priority for the specific user. In particular, as shown in Fig. 8, these data may also be further processed in such a way as to enable the direct building-up of the timeline 808 on the display of the electronic device of the user.

### Timeline

In general, the timeline is a suitable graphical representation of events and/or entries, which are of interest to a specific user and which are displayed on the timeline in their chronological order. In general, the timeline may be displayed as a horizontal (or vertical) line or as a line inclined under any angle in between with a clear mark describing "today" or the current moment as the clear border between the past and the future. Anything on the one side of the mark is history, and anything on the other side of the mark is in the future. On the line, representing the time, e.g. in future, are upcoming, past or current moments (events or entries) related to activities, people, events or content called "entry" that have varied importance through what we call significance to the user. For displaying each entry suitable simple graphical symbols are used, such as circles, triangles, squares or even icons directly representing (summarizing) the event or entry on the timeline.

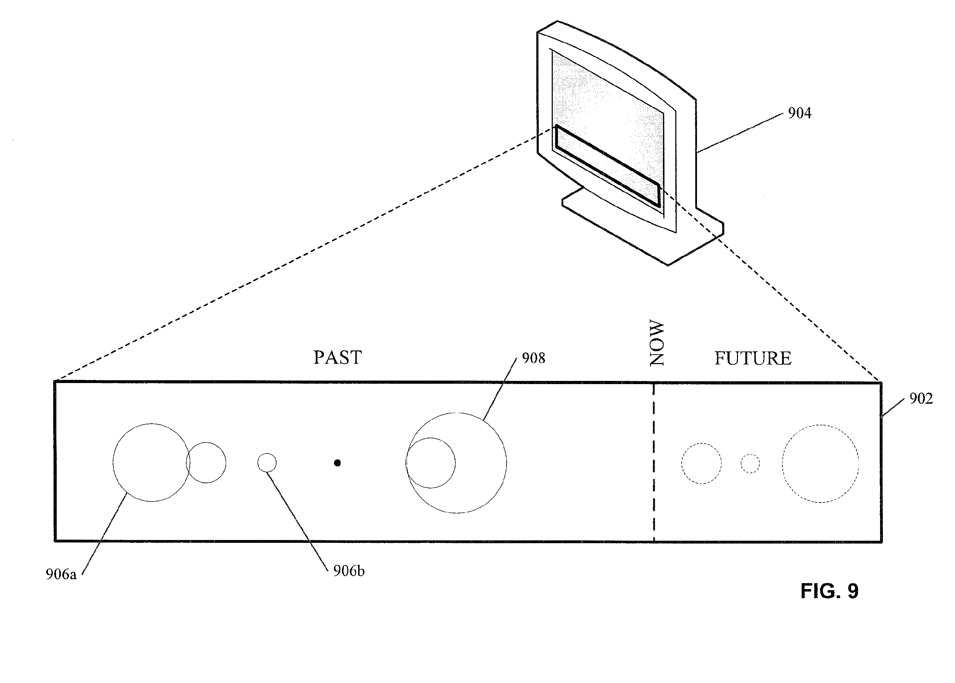

As shown in Fig. 9, the timeline 902 may be displayed e.g. along the bottom rim of the display 904 of the electronic device used by the user to access and explore the social network. Such a bar-like timeline may be displayed as a permanent background symbol on the user's display, unless the user requests a larger or different representation of the timeline, e.g. by zooming into the timeline or clicking onto a button which causes the timeline to be built-up on the entire display of the user.

As shown in Fig. 9, the size of the graphical symbol 906a, 906b (e.g. circle) that indicates an event and/or entry on the timeline 902 represents its significance to the user in relation to the other events or entries. There may be provided a directly proportional dependency of the size of a graphical symbol 906a, 906b on the significance of the event or entry to the user. This dependency may, however, also be stepped or non-linear, as desired by the user. As an example (using circles as an example of the graphical symbol for an event or entry), circles of a first diameter may indicate events or entries of a significance below a first threshold value, circles of a second diameter, which is larger than the first diameter, may indicate events or entries of a significance above the first threshold value but below the second threshold value, and so on.

Of course, instead of 1D graphical symbols, such as circles, the events or entries on the timeline may also be displayed as bars, discs or other suitable 2D or 3D graphical symbols (arranged around the timeline), where the height of the graphical symbol encodes the significance of the event or entry associated therewith.

The user can move the displayed partition of the timeline 902 either into the past or into the future. He can zoom into the timeline 902 to explore a certain moment in time, opening more details on that moment. Further the user can scroll into the "depths" (like moving the timeline 902 closer to him or further away) to filter the timeline 902 by different entry themes, e.g. looking only at news, activities about friends, gaming activities, etc.

Significance can be displayed in context to myself (= the user), to friends (connected to the user), to overall community and others segmentations in order to measure the significance of the user's s entries compared to more than just himself. The significance over time can grow and update itself. When a user checks the timeline 902 at a later time, he can see a bigger significance if an entry did increase its significance between his previous and his current access of the timeline.

The timeline may also provide a graphical representation 908 that clearly indicates the change in significance of events or entries over time, e.g. between a previous log-in of the user and the current log-in. As an example a rim around a circle of an event or entry in a different color than the circle may represent an increase (decrease) in significance between two subsequent log-ins of the user.

### Structure of the timeline

Every user can define what kind of events he wants to place on the timeline 902. Users can set rules which entries should be placed on the timeline automatically. By default all entries are displayed and can be filtered by similar categories as used in his interest cloud.

Entries placed on the timeline 902 appear as suitable graphical symbols 906a, 906b, such as circles. Next to the circle a small icon may show the category of the entry. Hovering over the icon with a pointing device or finger may offer more information about the event or entry. Clicking the icon can connect directly to an information page on the event or entry, the page of the event or entry itself (if applicable), to the creator of the event or entry, or any link specified by the creator of the link or the owner of the timeline.

Explicit entries create explicit sized graphical representations automatically by the system through measuring the significance of the entry, by example if a user uploads a video and it is very popular, it would create an entry and soon, reflecting the popularity, a big graphical symbol would grow, and as long as its popularity grows, the graphical symbol would continue growing in size. Since the overall size would be relative to the user, his friends or other segments the size would alter in display. These would be implicit entries with auto-sized graphical symbols.

A user can modify a graphical symbol of an implicit event or entry and override it to one that the user feels explicitly as representative in significance to himself.

A user can add explicit events or entries with manually created graphical symbols to allow the user to define its significance for himself, for example a special experience day with a highscore achieved, or the birthday of a very important person.

The size of the future entries' graphical symbols can be based on the user's personal settings, as much as on recommendations of the creator of the entry graphical symbol. This doesn't have to be a fixed value, for example a product manufacturer can decide the graphical symbol of the entry should be scaled related to the user's interest on a certain product. Thus the more a user is interested in the event about a product the bigger the graphical symbol will be. Likewise if significance is relatively filtered to overall community, it would show significance of the entry relative to overall community.

Next to each entry graphical symbol an info box can be displayed to show more information about the entry. Hovering the mouse over the box highlights the graphical symbol and offers more actions that can be activated, for example an entry about an event sent by a friend offers the following actions to a) start a chat with the friend, b) visit his page, c) visit the page of the event or d) delete the event from the timeline. More contextual actions are possible depending on the entry.

### Searching the timeline

The user can search through the timeline in different ways. He can manually scroll along the line forward and backward, he can filter for example by different categories, or he can search for tag words (which can be saved as a new filter).

The timeline entries can be colored in different shades to ease the search. In combination with the different sizes scrolling along the timeline eases the search for certain entry.

### Automatic creation of timeline entries

Any entry a user is doing online can be placed on the timeline, depending on the settings the user sets. Thus if a user plays an online game this entry is placed as an entry graphical symbol on the timeline. If the player wins the game, plays for a certain amount of time or plays with his favorite friends the graphical symbol might be bigger to display the social significance of this event.

### Visibility on the timeline

The user can set certain filters on the visibility of the timeline entries. Thus the user can view activities marked as private, friends, public or game-related to name a few examples.

As a default all entries are visible on the timeline.

To visualize to the user the timeline is in a filtered state all entries that are currently not displayed are rendered in a different visual style (for example blurred or greyed out, or shown in a 3D style in the background). If these entries are enabled again by changing the filters these entries move back into view, e.g. to the front.

To visualize that entries have changed (e.g. their significance and circle size changed) the circle outline is animated (i.e. showing an expanding or shrinking animation) or the color/ brightness is animated.

For various reasons the visualization can be changed from a continuous timeline to a table view, known as a typical calendar view, where each day, week, month or other defined timeframe can be displayed as for example boxes.

### Maintenance and management of the timeline

The user can manipulate the events and entries on the timeline in many different fashions. Filters, as mentioned above, can be used to apply certain actions on events and entries, for example all events and entries about games can be increased in importance, or deleted, or moved.

Any action can be applied to single events and entries, to groups (groups can be defined by filters, searching or other methods) or to all events and entries.

The user can search through all events and entries looking for certain tag words. Applying search words to the timeline dynamically highlights all hits, while all other entries will move to the back.

The user can apply alarms to future entries that will inform him in time of the entries. These alarms can be set per single entry or for any group of entries.

### Display of the timeline

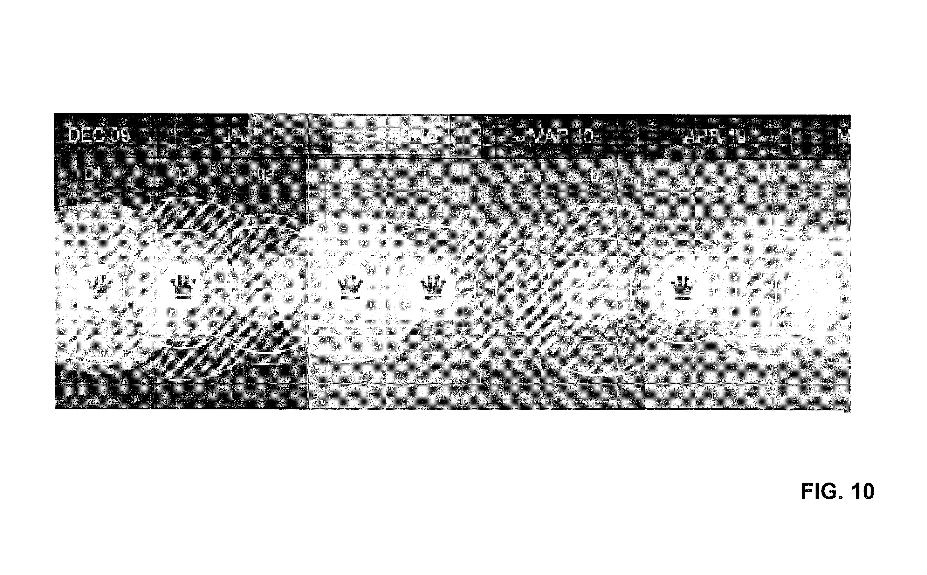

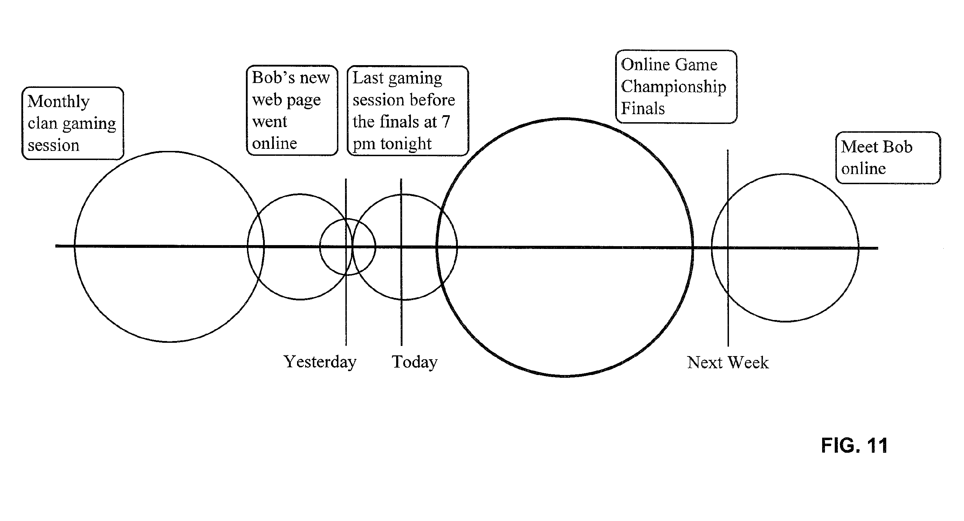

Fig. 10 and 11 show two exemplary variations of a timeline according to the present invention. Both are examples, are not the final renderings and shall not be construed to delimit the scope of protection of the present invention.

The first version according to Fig. 10 shows a timeline with a possible color and style theme. The user is able to display the timeline with different themes.

The second table according to Fig. 11 shows a schematic of the timeline concentrating on the main features.

As will become apparent to the person skilled in the art the method according to the present invention provides added visibility of relation to activities, events, content and people - collectively moments - and it is in particular the visualization of the dynamic significance that changes the timeline into an easy-to-use productive social life tool when using social networks.

While various embodiments have been described above, it should be understood that they have been presented by way of example only, and not limitation. For example, any of the elements associated with the social network engine may employ any of the desired functionality set forth hereinabove. Thus, the breadth and scope of a preferred embodiment should not be limited by any of the above-described exemplary embodiments.

## Claims

1. A computer-implemented method for displaying an individual timeline of a user of a social network, said timeline being a graphical representation of events and/or entries, which are of interest to said user and are displayed in their chronological order, comprising:
maintaining in a computer system for each user of said social network data on individual preferences and/or interests of the user and the significance of each preference and/or interest for the user;
obtaining input data including data on events and/or entries;
attributing a time tag to said events and/or entries of said input data; and
displaying at least one selected one of said events and/or entries of said input data in the individual timeline of said user; wherein
the graphical representation of each selected event and/or entry displayed in said timeline is dependent on the individual preferences and/or interests of said user.

2. The computer-implemented method as claimed in claim 1, wherein
said computer system further maintains a plurality of relationships among members of the social network, each relationship comprising a connection between at least two members of the social network and being associated with a relationship significance, and
the graphical representation of each selected event and/or entry displayed in said timeline is dependent on the relationship significance of at least one member of the social network connected to said user.

3. The computer-implemented method as claimed in any of the preceding claims, wherein
computer system further maintains a community significance, which is attributed to all members of a community of said social network and represents a global significance of events and/or entries, and
the graphical representation of each selected event and/or entry is displayed depending on the community significance.

4. The computer-implemented method as claimed in claim 3, wherein
the community significance is dynamically adjusted and
a difference of the present graphical representation of a selected event and/or entry to a previous graphical representation of the selected event and/or entry is displayed.

5. The computer-implemented method as claimed in any of the preceding claims, wherein the scale of the timeline or of at least one subsection of the timeline is varied in accordance with user commands of the user.

6. The computer-implemented method as claimed in any of the preceding claims, wherein the graphical representation of said selected events and/or entries consists of a 2D or 3D geometrical object and visual information about said selected events and/or entries.

7. The computer-implemented method as claimed in any of the preceding claims, wherein the graphical representation is configured to establish a connection to a website or page containing information, in particular to an information page or website, a page or website of the event or entry itself, to the creator of the event or entry or to a link specified by the creator of the event or entry or by the user.

8. The computer-implemented method as claimed in any of the preceding claims, wherein the step of obtaining input data comprises at least one of:
monitoring and analyzing the user's interaction with an electronic device, in particular with a graphical user interface (GUI) of an electronic device;
receiving and analyzing data provided by an external database, external service provider or data feeds from sources external of said social network;
monitoring and analyzing the user interactions of at least one other user of the social network.

9. The computer-implemented method as claimed in claim 8, wherein the step of monitoring and analyzing the user interactions of at least one other user of the social network comprises:
monitoring and analyzing the user interactions of at least one member of the social network who is connected to said user, in particular via the settings of the user's profile or of a friends profile.

10. The computer-implemented method as claimed in claim 8, wherein
the step of monitoring and analyzing the user interactions of at least one other user of the social network comprises:
monitoring and analyzing the user interactions of all members of the social network or of all members of the social network having identical or similar preferences and/or interests; and
the step of displaying said at least one selected one of said events and/or entries of said input data in the individual timeline of said user further comprises:
displaying a candidate event and/or entry in a different manner or style;
prompting or waiting for an interaction of said user with the candidate event and/or entry confirming that the candidate event and/or entry shall be displayed in a standard manner or style; and
displaying the candidate event and/or entry in the standard manner to thereby enter a new event and/or entry in the individual timeline of said user.

11. The computer-implemented method as claimed in any of the preceding claims, wherein the step of displaying said at least one selected one of said events and/or entries of said input data in the individual timeline of said user further comprises:
displaying at least one other event and/or entry, which is not a selected one of said events and/or entries of said input data, in a different manner or style in the individual timeline of said user.

12. The computer-implemented method as claimed in any of the preceding claims, further comprising:
prompting said user to perform a search for matching at least one search criterion, such as keywords, among all events and/or entries displayed in said individual timeline of said user;
performing a search for matching said at least one search criterion, such as keywords, among all events and/or entries displayed in said individual timeline of said user in accordance with a response of said user in response to said step of prompting;
and highlighting or selecting only those events and/or entries displayed in said individual timeline of said user matching to said at least one search criterion of said response by said.

13. The computer-implemented method as claimed in claim 12, wherein the step of prompting said user to perform said search for matching at least one search criterion comprises at least one of:
prompting said user to enter at least one search criterion;
prompting said user for enabling an access to at least one search criterion pre-defined by said user and stored in said computer system.

14. A computer system for running a social network consisting of a plurality of members, said computer system being configured for performing the computer-implemented method as claimed in any of the preceding claims.

15. A computer-readable storage medium tangibly embodied thereon instructions, wherein said instructions in response to execution by a processor cause said processor to perform the computer-implemented method as claimed in any of the claims 1 to 13.
